Europäisches Patentamt

European Patent Office

Office européen des brevets

(19)

(11) EP 0 731 970 B1

(12) EUROPÄISCHE PATENTSCHRIFT

(45) Veröffentlichungstag und Bekanntmachung des Hinweises auf die Patenterteilung:
06.05.1999 Patentblatt 1999/18

(21) Anmeldenummer: 95901416.8

(22) Anmeldetag: 23.11.1994

(51) Int Cl.⁶: G11B 13/04

(86) Internationale Anmeldenummer:
PCT/EP94/03869

(87) Internationale Veröffentlichungsnummer:
WO 95/15557 (08.06.1995 Gazette 1995/24)

(54) **ROM-RAM-DISK**

ROM-RAM-DISK

DISQUE A MEMOIRE MORTE-MEMOIRE VIVE

(84) Benannte Vertragsstaaten:
DE FR GB IT

(30) Priorität: 03.12.1993 DE 4341223

(43) Veröffentlichungstag der Anmeldung:
18.09.1996 Patentblatt 1996/38

(73) Patentinhaber: DEUTSCHE THOMSON-BRANDT GMBH
78048 Villingen-Schwenningen (DE)

(72) Erfinder:
• KAWAMURA, Akira
Hachiouji-shi, Tokyo 193 (JP)
• MORIMOTO, Yasuaki
Rokusaki Sakurashi 1550-2 (JP)
• ZUCKER, Friedhelm
D-78052 Villingen-Schwenningen (DE)

(74) Vertreter: Zhang, Jianguo et al
THOMSON multimedia,
46 quai A. Le Gallo
92648 Boulogne Cédex (FR)

(56) Entgegenhaltungen:
EP-A- 0 309 721          US-A- 5 218 599

**Beschreibung**

Die Erfindung betrifft eine ROM-RAM-Disk und ein Verfahren, welches das Lesen des ROM-Bereiches und Schreiben des RAM-Bereiches in der gleichen Zeit sowie das gleichzeitige Lesen von ROM und RAM mit einer Abtasteinheit ermöglicht.

Bei einer ROM-RAM-Disk handelt es sich um einen optischen Aufzeichnungsträger, der nur lesbare Speicherbereiche und auch Speicherbereiche, die sowohl lesbar als auch beschreibbar sind, aufweist. Nur lesbare Speicher werden ROM bzw. read only memory und sowohl lesbare als auch beschreibbare Speicher werden RAM bzw. random access memory genannt. Ein ROM wird auf optischen Informationsträgern mit sogenannten Pits realisiert, die bei der CD eine spiralförmige Datenspur bilden. Während bei der CD eine lichtreflektierende Aluminiumschicht Vertiefungen, sogenannte Pits, aufweist, welche die auf der Disk gespeicherten Daten darstellen, weist die MOD eine magnetische Schicht auf, in der durch unterschiedliches Magnetisieren Daten aufgezeichnet bzw. von der Daten gelesen werden können. Informationen bzw. Bits werden ebenfalls auf einer spiralförmigen Datenspur in Domänen unterschiedlicher Magnetisierungsrichtung gespeichert. Dabei wird im Gegensatz zur analogen Schallplatte die Datenspur von innen nach außen mit konstanter Lineargeschwindigkeit, der sogenannten CLV bzw. constant linear velocity ausgelesen.

Aus der EP-A-0 309 721 ist ein plattenförmiger Aufzeichnungsträger bekannt, der eine Kombination aus einer optischen und einer magneto-optischen Platte - eine sogenannte ROM-RAM-Disk - dargestellt. Auf diesem Aufzeichnungsträger sind Daten sowohl in Pits als auch in Domänen in einer spiralförmigen Datenspur gespeichert. Da die Pits und magnetischen Domänen übereinander angeordnet sind, ist das Speichervermögen bzw. Speichervolumen der ROM-RAM-Disk theoretisch gleich der Summe der Speichervolumen.

Gemäß US-A-5 218 599 ist es bereits bekannt, RAM-Speicherbereiche außerhalb der sich überlagernden ROM-und RAM-Speicherbereiche vorzusehen. Da der Speicherbereich je Umdrehung im Innenbereich geringer als im Außenbereich ist, wird durch Überlagerung von ROM- und RAM-Speicherbereichen nur eine relativ geringfügige Erhöhung des Speichervolumens erreicht.

Um die auf einem optischen Informationsträger in Pits oder magnetischen Domänen bzw. in einem RAM- oder einem ROM -Bereich gespeicherten Informationen speichern und lesen zu können, ist eine minimale Länge der Speicherstrukturen erforderlich, die von der Wellenlänge des abtastenden Laserstrahls und des verwendeten Speicherprinzips abhängig ist. Bei einer häufig zum Abtasten optischer Informationsträger verwendeten Wellenlänge des Laserstrahls von 780 nm, beträgt die minimale Länge einer Speicherstruktur im RAM- oder im ROM-Bereich ungefähr 0,8 μm, um ein maximales Speichervolumen zu realisieren. Zur Wiedergabe von im RAM-Bereich einer ROM-RAM-Disk gespeicherter Informationen ist eine minimale Länge der Aufzeichnungstruktur für die RAM-Information von mehr als 1,38 μm erforderlich, um die RAM-Information aus dem aus ROM- und RAM-Informationen bestehenden Signalgemisch selektieren bzw. lesen zu können. Daraus resultiert, daß ein ROM- oder ein RAM-Bereich und ein ROM-RAM-Bereich mit unterschiedlicher Geschwindigkeit gelesen werden müssen bzw. ein gleichzeitiges Lesen des ROM-RAM-Bereiches sowie ein Lesen des ROM-Bereiches und ein Schreiben des RAM-Bereiches in der gleichen Zeit nicht möglich sind. Durch das Erhöhen der Lineargeschwindigkeit CLV verringert sich zwangsläufig das Speichervolumen der ROM-RAM-Disk gegenüber der theoretische doppelten Speicherkapazität.

Es ist deshalb Aufgabe der Erfindung, eine ROM-RAM-Disk und ein Verfahren zu schaffen, die ein gleichzeitiges Lesen von ROM und RAM sowie ein Lesen des ROM-Bereiches und ein Schreiben des RAM-Bereiches in der gleichen Zeit sowie ein möglichst großes Speichervolumen ermöglichen.

Diese Aufgabe wird durch die in den Hauptansprüchen angegebene Erfindung gelöst. Vorteilhafte Weiterbildung der Erfindung sind in Unteransprüchen angegeben.

Es wird von einer ROM-RAM-Disk ausgegangen, die in einer spiralförmigen Informationsspur sich überlagernde ROM- und RAM Speicherbereiche aufweist. Um trotz der zum Trennen der Informationen beim Lesen erforderlichen, längeren Speicherstrukturen und erhöhten Lineargeschwindigkeit ein möglichst großes Speichervolumen bei einem bezüglich des Durchmessers vergleichbaren Informationsträger zu gewährleisten, ist entweder der sowohl ROM- als auch RAM-Speicherstrukturen aufweisende Bereich einer ROM-RAM-Disk erst ab einem Durchmesser vorgesehen, ab dem bei konstanter Drehzahl eine Abtast oder Schreibgeschwindigkeit erreicht wird, die ein Lesen bzw. Trennen der in ROM- und RAM-Strukturen gespeicherten Informationen gewährleistet oder es ist der gesamte Speicherbereich mit verringerter Datentaktrate für den RAM als ROM-RAM-Bereich vorgesehen, der mit einer konstanten Lineargeschwindigkeit gespeichert und gelesen wird.

Während die erste Ausführung einen Aufzeichnungsträger vorsieht, der im Innnenbereich entweder einen ROM- oder einen RAM-Bereich und erst ab einem Durchmesser einen ROM-RAM-Speicherbereich vorsieht, bei dem bei konstanter Drehzahl eine zum Abtrennen eines ROM- oder RAM-Signals aus einem ROM-RAM-Signalgemisch erforderliche Lineargeschwindigkeit erreicht wird, besteht die zweite Ausführung darin, daß die zur Verfügung stehende Speicherfläche des Informationsträges vollständig als ROM-RAM vorgesehen ist und mit einer konstanten Lineargeschwindigkeit mit verringerter Datentaktrate für den RAM gelesen und gespeichert wird. Der ROM im ROM-RAM wird nicht verändert. Zur ersten Ausführung ist zu bemerken, daß die magnetooptische Disk im Zusammenhang mit dem Speichern und Lesen von Daten normaler Weise auf eine konstante Winkelgeschwindigkeit CAV bzw. eine konstante Drehzahl gesteuert wird, so daß die Lineargeschwindigkeit mit dem Radius ansteigt. Die RAM-Speicherkapazität des ROM-RAM-Bereiches der ROM-RAM-Disk ist deshalb trotz des erst bei einem größeren Durchmesser einsetzenden Anfangs identisch mit der Speicherkapazität einer herkömmlichen löschbaren Disk, wobei das Speichervolumen der ROM-RAM-Disk um den ROM-Bereich erhöht und das gleichzeitige Lesen von ROM und RAM sowie ein Lesen des ROM-Bereiches und ein Schreiben des RAM-Bereiches in der gleichen Zeit möglich ist. Der sowohl RAM- als auch ROM-Speicherstruktur aufweisende Bereich ist bei der ersten Ausführung ab einem Durchmesser vorgesehen, bei dem bei konstanter Drehzahl die Lineargeschwindigkeit vorzugsweise mindestens 1,8 m /Sek. beträgt.

Die Besonderheit des Verfahrens im Zusammenhang mit der ersten Ausführung besteht insbesondere darin, daß im Gegensatz zum ROM einer CD, der mit konstanter Lineargeschwindigkeit abgetastet wird, der ROM-RAM-Informationsträger mit konstanter Drehzahl bzw. konstanter Winkelgeschwindigkeit abgetastet wird bzw. Informationen mit konstanter Winkelgeschwindigkeit aufgezeichnet werden, wobei zum Lesen und zum Schreiben der Informationen einer ROM-RAM-Disk eine konstante Drehzahl der Disk im Bereich von 500 U/min. verwendet wird.

Das im Zusammenhang mit der zweiten Ausführung vorgesehene Verfahren besteht insbesondere darin, daß die ROM-RAM-Disk mit konstanter Lineargeschwindigkeit gelesen und beschrieben wird, wobei dies dadurch gelingt, daß die Informationen mit gegenüber der CD verringerter Datentaktrate im RAM-Bereich gespeichert und gelesen werden. Dabei wird eine bekannte Lineargeschwindigkeiten im Bereich von 1,2 m/s verwendet. In diesem Fall kann vorteilhaft in bekannter Weise mit konstanter Lineargeschwindigkeit bzw. CLV gearbeitet werden, da die erforderliche Verlängerung der Speicherstrukturen mit der verringerten Taktrate erreicht wird.

Ein Vergleich der Ausführungen zeigt, daß die zur Speicherung nutzbare Fläche bzw. das Speichervolumen der zweiten Ausführung gegenüber der ersten Ausführung weiter erhöht ist und aus der Summe der ursprünglichen ROM-Speicherkapazität und der neuen RAM-Speicherkapazität besteht.

Insbesondere durch die besondere Gestaltung des Aufzeichnungsträgers und das Verwenden einer konstanten Drehzahl oder durch Verwenden einer konstanten Lineargeschwindigkeit bei verringerter Datenrate des RAM wird in vorteilhafter Weise das Speichervermögen eines gleichzeitig in einer spiralförmigen Spur ROM- und RAM-Speicherbereiche enthaltenden Informationsträgers erhöht und ein gleichzeitiges Lesen von ROM und RAM sowie ein Lesen des ROM-Bereiches und ein Schreiben des RAM-Bereiches in der gleichen Zeit mit einer Abtasteinheit erreicht.

Nachfolgend wird die Erfindung anhand von Zeichnungen näher erläutert.

Es zeigen:

Fig. 1 Diagramm der Lineargeschwindigkeit;
Fig. 2 Prinzipskizze der Speicherbereichsverteilung eines ersten ROM-RAM-Informationsträgers;
Fig. 3 Prinzipskizze der Speicherbereichsverteilung eines zweiten ROM-RAM-Informationsträgers.

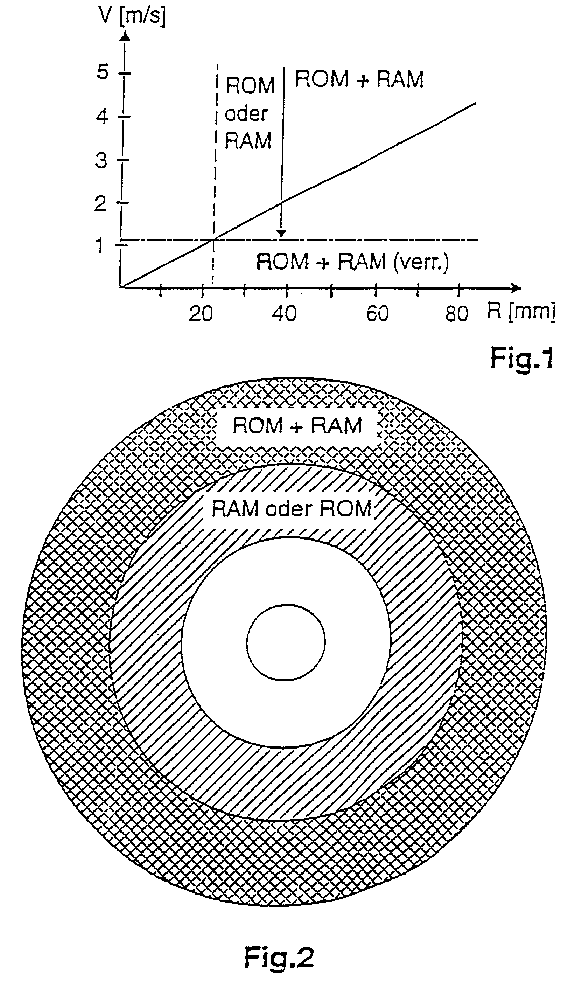

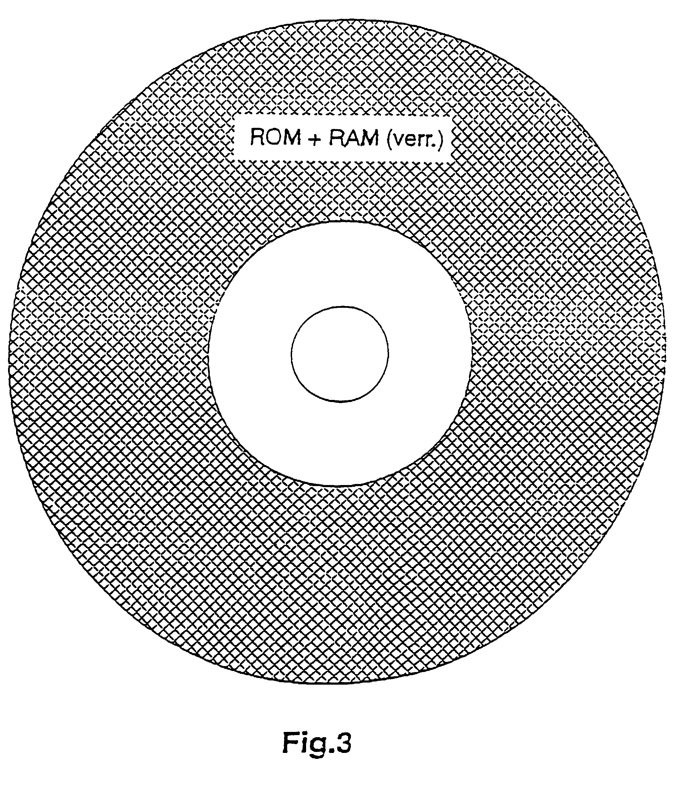

Einer ersten Ausführung entsprechend, ist in Figur 2 die Speicherbereichsverteilung eines ersten ROM-RAM-Informationsträgers bzw. einer ersten ROM-RAM-Disk und in Figur 3 ist die Speicherbereichsverteilung eines zweiten ROM-RAM-Informationsträgers bzw. einer zweiten ROM-RAM-Disk dargestellt. Die in den Figuren 2 und 3 als Prinzipskizze dargestellten ROM-RAM-Informationsträger weisen im Innenbereich eine Mittenbohrung zur Zentrierung des Informationsträgers in einem Abspiel- und/oder Aufzeichnungsgerät auf, an den sich ein gemäß einheitlicher Normung für Einspannzwecke vorgesehener Bereich anschließt, der ebenfalls nicht zur Informationsspeicherung vorgesehen ist. Zur Informationsspeicherung und Informationswiedergabe ist somit erst der Bereich ab einem Radius R von ungefähr 25 mm vorgesehen. Die ROM-RAM-Disk erster Ausführung gemäß Figur 2 weist ab dem zur Informationsspeicherung bzw. Informationswiedergabe vorgesehenen Radius R bzw. dem entsprechenden Durchmesser zunächst einen Bereich auf, der entweder ausschließlich magnetische Domänen oder ausschließlich Pits, d.h. entweder einen ROM oder einen RAM enthält. Diesem ersten Speicherbereich schließt sich dann ein zweiter Speicherbereich ROM-RAM an, der überlagert in einer spiralförmigen Spur sowohl Pits als auch magnetische Domänen aufweist, die den eigentlichen ROM-RAM-Speicherbereich bilden. Um die Elemente bekannter Aufzeichnungs- und Wiedergabeeinrichtungen vorteilhaft verwenden zu können und dennoch ein vergleichsweise höheres Speichervermögen realisieren zu können, wird vorzugsweise eine Speicherbereichsverteilung mit ROM-Speicher im Innenbereich gewählt, so daß eine Drehzahl von annähernd 500 U/min verwendet werden kann. Dies entspricht der Drehzahl einer CD im Innenbereich, wobei eine Lineargeschwindigkeit von ca. 1,2 m/s realisiert wird. Da diese Lineargeschwindigkeit für das Abtrennen einer ROM- oder einer RAM-Information aus einem ROM-RAM-Informationssignalgemisch nicht ausreichend ist, ist der ROM-RAM-Bereich erst ab einem Radius R bzw. Durchmesser vorgesehen, bei dem eine Lineargeschwindigkeit von mehr als 1,8 m/s bei konstanter Drehzahl erreicht wird. Dieser Wert tritt ab einem Radius R von ungefähr 40 mm auf, wie in Figur 1 anschaulich dargestellt ist. Obwohl der Aufzeichnungsträger bezüglich der zur Verfügung stehenden Speicherfläche nicht vollständig als ROM-RAM vorgesehen ist, wird ein vergleichsweise größeres Speichervermögen erreicht. Dies ist insbesondere auf die zur Abtastsignaltrennung erforderliche Länge der Speicherstruktur und auf eine notwendige Abtastgeschwindigkeit zurückzuführen, die höher ist, als bei einem ausschließlich ROM- oder RAM-Speicherbereiche aufweisenden Informationsträger.

Aus Figur 1 ist ersichtlich, daß bei konstanter Drehzahl von 500 U/min, siehe durchgehende Linie in Figur 1, die für nur RAM- oder nur ROM-Speicherbereiche erforderliche Geschwindigkeit V von 1,2 m/s bei einem Radius R von 25 mm und die zum Schreiben und Lesen von ROM-RAM-Speicherbereichen erforderliche Geschwindigkeit V von 1,8 m/s bei einem Radius R von 40 mm erreicht wird.

Die zweite Ausführung stellt gemäß Figur 3 eine ROM-RAM-Disk dar, die im gesamten zur Verfügung stehenden Speicherbereich auf einer spiralförmigen Spur überlagert sowohl Pits als auch Domänen aufweist, die einen ROM-RAM-Informationsträger bilden. Die ROM-RAM-Disk ist mit konstanter Lineargeschwindigkeit von nur 1,2 m/s beschrieben und wird auch nur mit dieser Lineargeschwindigkeit gelesen, obwohl diese eigentlich zum Abtrennen eines ROM- oder eines RAM-Signals aus einem ROM-RAM-Signalgemisch zu gering ist. Dennoch wird ein gleichzeitiges Lesen von ROM und RAM sowie einem Lesen des ROM-Bereiches und ein Schreiben des RAM-Bereiches in der gleichen Zeit und ein noch größeres Speichervolumen erreicht, indem die Datentaktrate der RAM-Information verringert wird. Das Verringern der Datenrate führt zu längeren Speicherstrukturen, so daß die zum Abtrennen eines ROM- oder eines RAM-Signals aus einem ROM-RAM-Signalgemisch erforderliche Länge der Speicherstrukturen erreicht wird. Das Speichervolumen wird weiter erhöht. Dies zeigt ein einfacher Vergleich. Bei einem inneren Radius Ri des Speicherbereiches von 25 mm und einem äußeren Radius Ra des Speicherbereiches von 75 mm ergibt sich bei CLV bzw. konstanter Lineargeschwindigkeit eine effektiv genutzte Fläche A von

$$A = \pi \bullet Ra^2 - \pi \bullet Ri^2 = \pi \bullet 5000 \text{ mm}^2.$$

Da davon auszugehen ist, daß bei konstanter Takt- bzw. Datenrate bei CAV bzw. konstanter Drehzahl der innere Radius Ri die Menge der gespeicherten Informationen je Spur bestimmt, steht in jeder Spur nur so viel Speichervolumen, wie in der ersten Spur, zur Verfügung. Von der Seite des Speichervolumens betrachtet, sind folglich alle Spuren gleich. Daraus folgt eine effektiv genutzte Fläche A von

$$A = 2 \bullet \pi \bullet Ri(Ra-Ri) = \pi \bullet 2500 \text{ nm}^2$$

Das Speichervolumen ist folglich bei CLV gegenüber dem bei CAV vergrößert, so daß ein weiterer Vorteil zu verzeichnen ist.

**Patentansprüche**

1.  ROM-RAM-Disk, die sich überlagernde ROM- und RAM-Speicherbereiche in einer spiralförmigen Spur aufweist, wobei die spiralförmige Spur sowohl Pits als auch magnetische Domänen mit einer jeweils unterschiedlichen minimalen Länge aufweist, , dadurch gekennzeichnet, daß die Pits und magnetische Domänen für die sich überlagernden ROM- und RAM-Speicherbereiche nur in einem äußeren Bereich der ROM-RAM Disk ab einem vorgegebenen Radius (R) enthalten sind, und daß in einem Bereich der ROM-RAM Disk innerhalb des vorgegebenen Radius (R) magnetische Domänen bzw. Pits nur für magnetische Domänen aufweisende RAM-Speicherbereiche oder für Pits aufweisende ROM-Speicherbereiche enthalten sind.

2.  ROM-RAM-Disk nach Anspruch 1, **dadurch gekennzeichnet, daß** der vorgegebene Radius (R) mindestens 34 mm beträgt.

3.  ROM-RAM-Disk, die im gesamten Speicherbereich sich überlagernde ROM- und RAM-Speicherbereiche in einer spiralförmigen Spur aufweist, wobei die spiralförmige Spur sowohl Pits als auch magnetische Domänen mit einer jeweils unterschiedlichen minimalen Länge aufweist, dadurch gekennzeichnet, daß magnetische Domänen auf der ROM-RAM-Disk eine minimale Länge aufweisen, welche im Verhältnis zu einer für Pits gewählten minimalen Länge vergrößert ist.

4.  Verfahren zum Lesen von Pits und zum gleichzeitigen Lesen oder Schreiben von magnetischen Domänen einer ROM-RAM-Disk nach Anspruch 1, dadurch gekennzeichnet, daß magnetische Domänen sich innerhalb eines vorgegebenen Radius (R) nicht mit und außerhalb des Radius (R) sich mit Pits überlagernd beschrieben werden und die Disk mit einer konstaten Drehzahl angetrieben wird.

5.  Verfahren zum Lesen von Pits und zum gleichzeitigen Lesen oder Schreiben von magnetische Domänen einer ROM-RAM-Disk nach Anspruch 1, dadurch gekennzeichnet, daß magnetische Domänen nur in einem Bereich ab einem vorgegebenen Radius (R) sich mit Pits überlagernd beschrieben werden, der Bereich bis zum vorgegebenen Radius (R) ausschließlich Pits aufweist und die disk mit einer konstanten Drehzahl angetrieben wird.

6.  Verfahren zum Lesen von Pits und zum gleichzeitigen Lesen oder Schreiben von magnetischen Domänen einer ROM-RAM-Disk nach Anspruch 3, **dadurch gekennzeichnet, daß** die ROM-RAM-Disk mit einer konstanten Lineargeschwindigkeit, der minimalen Pitlänge entsprechend, angetrieben wird, und daß zum Lesen bzw. Schreiben der magnetischen Domänen eine maximale Datenrate verwendet wird, die für ein möglichst großes Speichervolumen der ROM-RAM-Disk geringer als die Datenrate zum Lesen der Pits ist.

## Claims

1. ROM-RAM disk which has mutually superimposed ROM and RAM memory areas on a spiral track, the spiral track having both pits and magnetic domains with a minimum length which is in each case different, characterized in that the pits and the magnetic domains for the mutually superimposed ROM and RAM memory areas are contained only in an outer area of the ROM-RAM disk beyond a predetermined radius (R), and in that an area of the ROM-RAM disk inside the predetermined radius (R) contains magnetic domains and pits only for RAM memory areas having magnetic domains or for ROM memory areas having pits.

2. ROM-RAM disk according to Claim 1, characterized in that the predetermined radius (R) is at least 34 mm.

3. ROM-RAM disk which has mutually superimposed ROM and RAM memory areas on a spiral track throughout the entire memory area, the spiral track having both pits and magnetic domains having a respectively different minimum length, characterized in that magnetic domains on the ROM-RAM disk have a minimum length which is greater than a minimum length chosen for pits.

4. Method for reading pits and for simultaneously reading from or writing to magnetic domains on a ROM-RAM disk according to Claim 1, characterized in that magnetic domains inside a predetermined radius (R) are not written with pits superimposed on them, and outside the radius (R) are written with pits superimposed on them, and the disk is driven at a constant rotation speed.

5. Method for reading pits and for simultaneously reading from or writing to magnetic domains on a ROM-RAM disk according to Claim 1, characterized in that magnetic domains are written with pits superimposed on them only in an area beyond a predetermined radius (R), the area up to the predetermined radius (R) has only pits, and the disk is driven at a constant rotation speed.

6. Method for reading pits and for simultaneously reading from or writing to magnetic domains on a ROM-RAM disk according to Claim 3, characterized in that the ROM-RAM disk is driven at a constant linear velocity, corresponding to the minimum pit length, and in that a maximum data rate is used for reading from and writing to the magnetic domains, which data rate is less for the maximum possible memory volume of the ROM-RAM disk than the data rate for reading the pits.

## Revendications

1. Disque à mémoire morte-mémoire vive ROM-RAM qui comprend des zones de mémoire morte (ROM) et de mémoire vive (RAM) superposées sur une piste en spirale qui présente aussi bien des creux que des domaines magnétiques de longueurs minimales différentes, **caractérisé en ce que** les creux et les domaines magnétiques des zones de mémoires ROM et RAM superposées ne sont contenues que dans une zone extérieure du disque ROM-RAM à partir d'un rayon (R) prédéfini et que dans une zone du disque ROM-RAM à l'intérieur du rayon (R) prédéfini ne sont contenues respectivement que des domaines magnétiques ou des creux correspondant à des zones de mémoire RAM présentant des domaines magnétiques ou à des zones de mémoire ROM présentant des creux.

2. Disque ROM-RAM selon la revendication 1, **caractérisé en ce que** le rayon (R) prédéfini présente une longueur minimale de 34 mm.

3. Disque ROM-RAM qui comprend dans toute la zone de mémoire des zones de mémoire ROM et RAM superposées sur une piste en spirale qui présente aussi bien des creux que des domaines magnétiques de longueurs minimales différentes, **caractérisé en ce que** les domaines magnétiques du disque ROM-RAM présentent une longueur minimale qui est accrue par rapport à une longueur minimale définie pour les creux.

4. Procédé permettant de lire des creux et simultanément de lire ou écrire des domaines magnétiques d'un disque ROM-RAM selon la revendication 1, **caractérisé en ce que** les domaines magnétiques à l'intérieur d'un rayon (R) prédéfini sont écrits sans superposition à des creux tandis qu'à l'extérieur du rayon (R) les domaines magnétiques sont écrits en superposition à des creux et en ce que le disque est actionné avec une vitesse de rotation constante.

5. Procédé permettant de lire des creux et simultanément de lire ou écrire des domaines magnétiques d'un disque ROM-RAM selon la revendication 1, **ca-**

**ractérisé en ce que** les domaines magnétiques sont écrits en superposition à des creux uniquement dans une zone à partir d'un rayon (R) prédéfini, la zone jusqu'au rayon (R) prédéfini ne présente que des creux et le disque est actionné avec une vitesse de rotation constante.

6. Procédé permettant de lire des creux et simultanément de lire ou écrire des domaines magnétiques d'un disque ROM-RAM selon la revendication 3, **caractérisé en ce que** le disque ROM-RAM est actionné à une vitesse linéaire constante, qui correspond à la longueur minimale des creux et en ce que pour la lecture ou l'écriture des domaines magnétiques un débit de données maximal inférieur au débit de lecture des creux est utilisé, pour un volume mémoire maximal du disque ROM-RAM.

Fig.1

Fig.2

ROM + RAM (verr.)

Fig.3